# EUROPEAN PATENT APPLICATION

(11) **EP 4 778 640 A1**
(43) Date of publication of application: **22.07.2026**
(21) Application number: 25869572.5
(22) Date of filing: 18.07.2025
(51) Int. Cl.: B21D 5/14, H01M 50/533, H01M 50/54

(54) **TAB BENDING DEVICE, ROLLER, AND SECONDARY BATTERY MANUFACTURED THEREBY**

(30) Priority: 29.11.2024 KR 20240175547
(71) Applicant: LG ENERGY SOLUTION, LTD., Seoul 07335 (KR)
(72) Inventor: YOON, Kyoung Soon, Daejeon 34122 (KR); LEE, Yong Tae, Daejeon 34122 (KR); KO, Myung Hoon, Daejeon 34122 (KR); PARK, Wan Geun, Daejeon 34122 (KR); KIM, Nam Geol, Daejeon 34122 (KR); JEON, Young Je, Daejeon 34122 (KR)
(74) Representative: Goddar, Heinz J.
(86) International application number: PCT/KR2025/010650
(87) International publication number: WO 2026/116660

(57) **Abstract**

A secondary battery according to the present disclosure is configured to bend an electrode tab extending from an electrode body of an electrode, the electrode tab being provided in plurality, and includes a first roller configured to be located one side of the electrode and be rotated and moved and a second roller configured to be located at the opposite side of the one side of the electrode and be rotated and moved, wherein the first roller includes a first roller body configured to be in contact with the electrode body and a first pressing portion extending in a radial direction of the first roller body to press the electrode tab, wherein the second roller includes a second roller body corresponding to the first roller body and a second pressing portion corresponding to the first pressing portion, and wherein the first pressing portion and the second pressing portion are configured to alternately bend the plurality of electrode tabs in different directions.

## Description

### TECHNICAL FIELD

### CROSS-REFERENCE TO RELATED APPLICATIONS

This application is based on and claims priority from Korean Patent Application No. 10-2024-0175547, filed on November 29, 2024, with the Korean Intellectual Property Office, the disclosure of which is incorporated herein in its entirety by reference.

### TECHNICAL FIELD

The present disclosure relates to a tab bending apparatus, a roller, and a secondary battery manufactured thereby. More particularly, the present disclosure relates to a tab bending apparatus capable of effectively bending an electrode tab for the purpose of space utilization and a secondary battery manufactured thereby.

### BACKGROUND ART

A secondary battery configured to generate electricity is provided such that an electrode assembly is accommodated in a battery case. In this instance, the electrode assembly is formed by alternately stacking a plurality of electrodes and a plurality of separators. The electrode may include an electrode body on which an active material directly involved in electricity generation is located and an electrode tab extending from the electrode body to transfer generated electricity to the outside.

A plurality of electrode tabs of the respective plurality of electrodes may be combined into one electrode tab by welding or the like to be coupled to an electrode lead. Accordingly, the generated electricity may be transferred from the electrode tab to the electrode lead. The electrode lead is connected to the outside of the secondary battery, to become a path through which electricity is transferred to a component requiring the electricity. In this instance, the electrode tab is not a direct component which generates electricity, and therefore, a space occupied by the electrode tab may be referred to as a dead space, as a space occupied by a component which does not generate electricity. The secondary battery may be generally disposed in a narrow space, and therefore, utilization of spaces is important. In light of this, reducing the dead space may increase an amount of electricity to be generated per unit space, and therefore may become an important problem in the utilization of spaces.

When the plurality of electrode tabs extend in a direction distant from the electrode body to be coupled to each other, the plurality of electrode tabs may be bent in one direction so as to solve occurrence of a problem that many unnecessary dead spaces are formed.

In this instance, it is problematic how a configuration of a tab bending apparatus for bending the plurality of electrode tabs is provided.

The above-described background art is technical information that the inventor had or learned when or while deriving embodiments of the present disclosure and may not have been publicly known before the filing of the present application.

### DISCLOSURE

### TECHNICAL PROBLEM

The present disclosure is designed to solve the problems of the related art, and therefore the present disclosure is directed to providing a tab bending apparatus for bending an electrode tab and a secondary battery manufactured thereby.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A tab bending apparatus according to one aspect of the present disclosure is configured to bend an electrode tab extending from an electrode body of an electrode, the electrode tab being provided in plurality, and includes a first roller configured to be located at one side of the electrode and be rotated and moved; and a second roller configured to be located at the opposite side of the one side of the electrode and be rotated and moved, wherein the first roller includes a first roller body configured to be in contact with the electrode body; and a first pressing portion extending in a radial direction of the first roller body to press the electrode tab, wherein the second roller includes a second roller body corresponding to the first roller body; and a second pressing portion corresponding to the first pressing portion, and wherein the first pressing portion and the second pressing portion are configured to alternately bend the plurality of electrode tabs in different directions.

The first pressing portion may be located at an end portion of the first roller body and be provided adjacent to the electrode tab.

The first roller may be located at a position corresponding to the second roller.

Only a portion of the first pressing portion may extend in a circumferential direction of the first roller body with respect to a rotational axis of the first roller body.

The first pressing portion may be configured to press only any one of adjacent electrode tabs.

The second pressing portion may be configured not to press any one of the plurality of electrode tabs while the first pressing portion presses one of the plurality of electrode tabs.

The first roller may further include a first support portion configured to support the electrode tab while the second pressing portion presses the electrode tab.

The second roller may further include a second support portion configured to support the electrode tab while the first pressing portion presses the electrode tab, so as to correspond to the first support portion.

The first support portion may be located at the opposite side of a side at which the pressing portion is located with respect to the rotational axis of the first roller body.

The first support portion may extend in the circumferential direction of the first roller body by a length corresponding to the second pressing portion
The first support portion may have a first support inclined surface configured to support the electrode tab at a side facing the electrode tab.

The first support inclined surface may be inclined to come close to the rotational axis of the first roller body with respect to an extending direction of the rotational axis of the first roller body such that the electrode tab is bent in a direction instead of a vertical direction with respect to the electrode body.

The first roller may include a first guide rib extending in the circumferential direction of the first roller body to support an end portion of the second pressing portion in the radial direction at an outside of the second pressing portion in the radial direction.

The first roller may further include a first support portion configured to support the electrode tab while the second pressing portion presses the electrode tab, and the first guide rib may protrude from the first support portion.

The first support portion may have a first support inclined surface configured to support the electrode tab at a side facing the electrode tab, and the first guide rib may protrude to be stepped from the support portion such that the first guide surface configured to face the second pressing portion is located between the first guide rib and the first support inclined surface.

A roller according to another aspect of the present disclosure is configured to be located at one side of an electrode in which an electrode tab provided in plurality is formed and be rotated and moved, and includes a first roller body configured to be in contact with an electrode body; and a first pressing portion extending in a radial direction of the first roller body to press the electrode tab, wherein the first pressing portion is configured to bend only ones not adjacent to each other among the plurality of electrode tabs.

The first pressing portion may be located at an end portion of the first roller body and be provided adjacent to the electrode tab.

Only a portion of the first pressing portion may extend in a circumferential direction of the first roller body with respect to a rotational axis of the first roller body.

The first roller may include a first support portion located at the opposite side of a side at which the pressing portion is located with respect to the rotational direction of the first roller body, the first support portion having a support inclined surface.

A secondary batter according to still another aspect of the present disclosure includes an electrode assembly formed by stacking an electrode including an electrode body and an electrode tab provided in plurality, the electrode tab extending from the electrode body; and a battery case accommodating the electrode assembly, wherein the electrode tab is provided in a pair to be bent in directions opposite to each other from the electrode body, and wherein angles at which the pair of electrode tabs are bent are symmetrically the same.

### ADVANTAGEOUS EFFECTS

According to one aspect of the present disclosure, in the tab bending apparatus, the first roller body and the second roller body alternately press electrode tabs, so that a pair of electrode tabs can be provided to be bent in different directions.

According to one aspect of the present disclosure, in the tab bending apparatus, the second roller includes a support portion supporting an electrode tab at the opposite side in a pressing direction while the first roller presses the electrode tab, so that the electrode tab can be stably bent without damage of the electrode tab.

According to one aspect of the present disclosure, in the tab bending apparatus, the second roller includes a guide rib guiding movement of the first roller while the first roller presses an electrode tab, so that the first roller can be prevented from being separated from a predetermined path.

According to one aspect of the present disclosure, the roller is included in the above tab bending apparatus, so that above effects can be obtained.

According to one aspect of the present disclosure, in the secondary battery, an electrode tab is bent by the above tab bending apparatus, so that spaces can be efficiently used.

The effects of the present disclosure are not limited to the effects mentioned above, and other effects not mentioned will be clearly understood by those skilled in the art from the description of the claims.

### DESCRIPTION OF DRAWINGS

FIG. 1 is an assembly diagram of a secondary battery according to a first embodiment of the present disclosure.
FIG. 2 is an assembly diagram of an electrode assembly shown in FIG. 1.
FIG. 3 is a perspective view showing a tab bending apparatus for bending an electrode tab and an electrode as shown in FIG. 2.
FIG. 4 is a perspective view showing that a first roller and a second roller, shown in FIG. 3, are further rotated.
FIG. 5 is a perspective view showing the first roller shown in FIG. 3.
FIG. 6 is a perspective view of a first roller according to a second embodiment of the present disclosure.
FIG. 7 is a perspective view of a first roller according to a third embodiment of the present disclosure.
FIG. 8 is a perspective view of a first roller according to a fourth embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B," "at least one of A and B," "at least one of A or B," "A, B or C," "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first," "second" and so on may be simply used to distinguish the corresponding element from the corresponding other embodiment, and are not intended to limit the corresponding elements in another aspect 130a-1 (for example, importance or order).

When an element (for example, first) is referred to as being "coupled" or "connected" to another element (for example, second) with or without the term "functionally" or "through communication," the element may be connected to the other element directly (for example, wiredly), wirelessly or through a third element.

The term "comprise," "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to," "being coupled to," "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction," "lower," and "front-rear direction" as used herein are defined on the basis of the drawings, and the shape and location of each element is not limited by these terms.

Hereinafter, embodiments according to the present disclosure will be described in detail with reference to the accompanying drawings.

### First embodiment

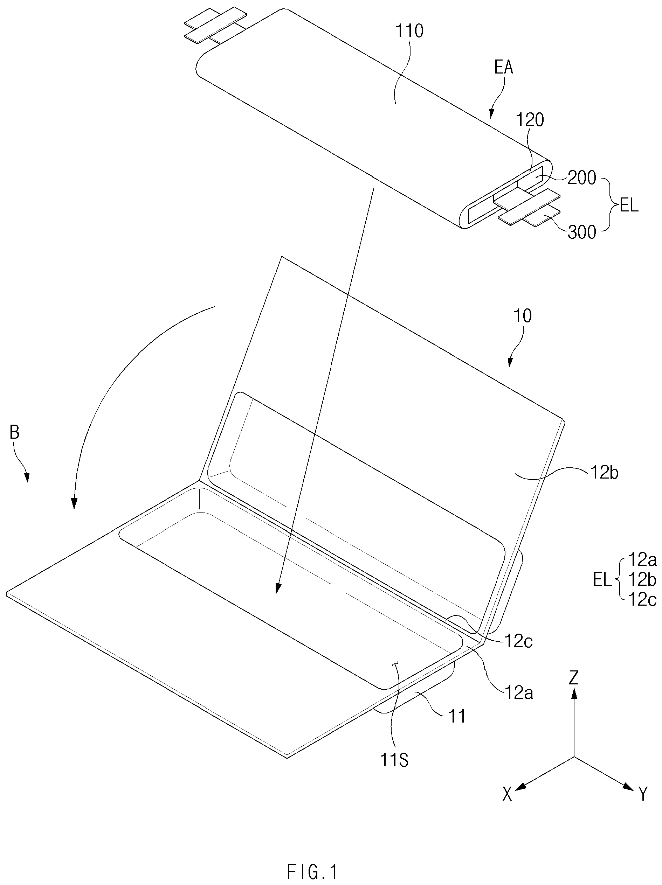

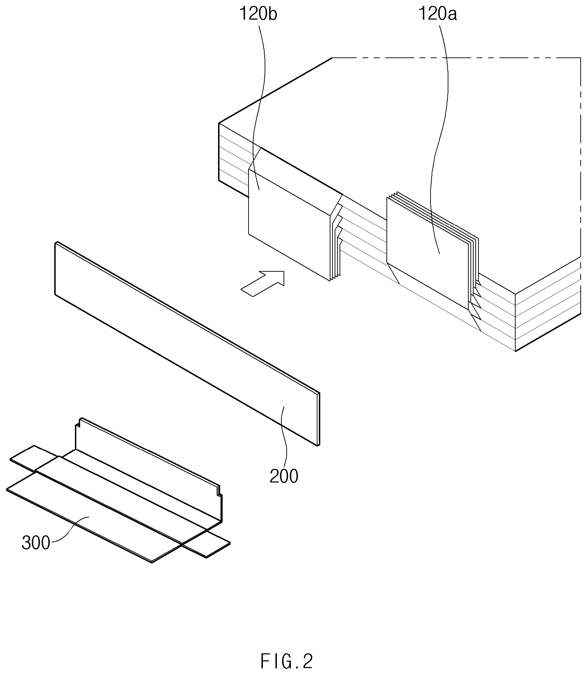

FIG. 1 is an assembly diagram of a secondary battery according to a first embodiment of the present disclosure. FIG. 2 is an assembly diagram of an electrode assembly shown in FIG. 1.

The secondary battery according to the first embodiment of the present disclosure will be described with reference to FIGS. 1 and 2.

A secondary battery B configured to generate electricity may be provided. The secondary battery B may be rechargeable and used plural times. The secondary battery B may include a battery case 10 located at an outside thereof, the electrode assembly EA accommodated inside the battery case 10, and an electrolyte configured to be injected into the battery case 10. In this instance, as shown in FIG. 1, the battery case 10 may be formed by a pouch film. However, the battery case 10 may be provided in a cylindrical type or a prismatic type according to the needs. The electrolyte may generally mean a liquid-state electrolyte but may mean a solid-state electrolyte according to the needs.

The battery case 10 may include an accommodation portion 11 in which an electrode accommodation space 11S is formed to accommodate the electrode assembly EA and a side portion 12 extending from the accommodation portion 11. The accommodation portion 11 may be provided in a pair as shown in FIG. 1. When the electrode assembly EA is accommodated in any one accommodation portion 11, the other accommodation portion 11 covers the electrode assembly EA, to allow the electrode assembly EA to be accommodated in the battery case 10. The accommodation portion 11 may be formed in a pair in a single battery case 10. However, according to the needs, the accommodation portions 11 may be formed one by one in a pair of battery cases 10 distinguished from each other, respectively. Further, the accommodation portion 11 may be provided as a single one according to the needs.

The side portion 12 may include may include a lead sealing portion 12a, a degassing sealing portion 12b, and/or a folding portion 12c. The lead sealing portion 12a may be provided in a pair to extend in a Y direction from the accommodation portion 11. The degassing sealing portion 12b may be provided in a pair to extend in an X direction from the accommodation portion 11. The folding portion 12c may be located between the pair of accommodation portions 11. As shown in FIG. 1, the folding portion 12c may be folded such that the pair of accommodation portions 11 are located to face each other. When the pair of accommodation portions 11 face each other, the folded lead sealing portions 12a may be located to face each other, and the pair of degassing sealing portions 12b may also be located to face each other. The lead sealing portions 12a facing each other and the degassing sealing portions 12b facing each other are fused with each other by heat and pressure, to seal the accommodation portion 11. Further, the degassing sealing portion 12b is trimmed to a predetermined length so as to increase space utility of the secondary battery B by reducing the length thereof, and the trimmed degassing sealing portion 12b is re-folded, thereby reducing a space occupied by the degassing sealing portion 12b.

The electrode assembly EA may include an electrode 100, a separator (not shown), and/or an electrode lead EL. The electrode 100 and the separator each may be provided in plurality such that the plurality of electrodes and the plurality of separators are alternately stacked. In this instance, the electrode 100 may include an electrode body 110 and an electrode tab 120 extending from the electrode body 110. The electrode tab 120 may be formed to have a width smaller than a width of the electrode body 110. An active material is coated on the electrode body 110 to directly generate electricity. The electrode tab 120 may serve as a path through which the electricity generated by the electrode body 110 is transferred. The electrode tab 120 is coupled to the electrode lead EL, to transfer the electricity to the electrode lead EL. The electrode lead EL protrudes to an outside of the battery case 10 such that an external component requiring electricity can be supplied with the electricity from the secondary battery B while being in contact with the electrode lead EL.

In this instance, the electrode tab 120 is not a portion which generates electricity, and therefore may not contribute to an amount of electricity generated per space. Therefore, it is necessary to reduce a dead space which is a space occupied by the electrode tab 120. In order to solve this, a secondary battery B according to an embodiment of the present disclosure may be provided as shown in FIG. 2.

As shown in FIG. 2, the electrode tab 120 may be configured not to extend toward an outside of the electrode 100 but to be bent to a lower side from the electrode body 110 so as to be adhered closely to the electrode body 110. However, the bending direction of the electrode tab 120 may become an upper side instead of the lower side according to the needs, and further, may become another direction as long as the bending direction is not parallel to the extending direction of the electrode body 110. The bent electrode tab 120 may form an electrode tab stack 121. One surface of the electrode tab stack 121 is located toward the right side with respect to FIG. 2, and the electrode lead EL may be coupled to the one surface of the electrode tab stack 121 at the right side of the electrode tab 120. Accordingly, a distance from the electrode body 110 to an end portion of the electrode tab 120 may become shorter than a distance when the electrode tab 120 extends in a direction parallel to the electrode body110. A space located at the upper side and the lower side of the electrode tab 120 may form the dead space as a space unnecessary for generating electricity. In particular, in order to reduce the dead space, it may be necessary to reduce a dead space distance which is a distance to an inner wall of the accommodation portion 11.

As the electrode tab 120 is bent, the electrode tab 120 does not extend in the same direction as the electrode body 110, so that the dead space can be reduced.

The electrode tab 120 may be bent from the electrode body 110. In this instance, each electrode 100 may be stacked in a state in which the electrode tab 120 has already been bent from the electrode body 110. However, according to the needs, an electrode 100 including an electrode tab 120 not bent from the electrode body 110 may be first stacked, and the stacked electrode tab 120 may be bent from the electrode body 110 after the stacking.

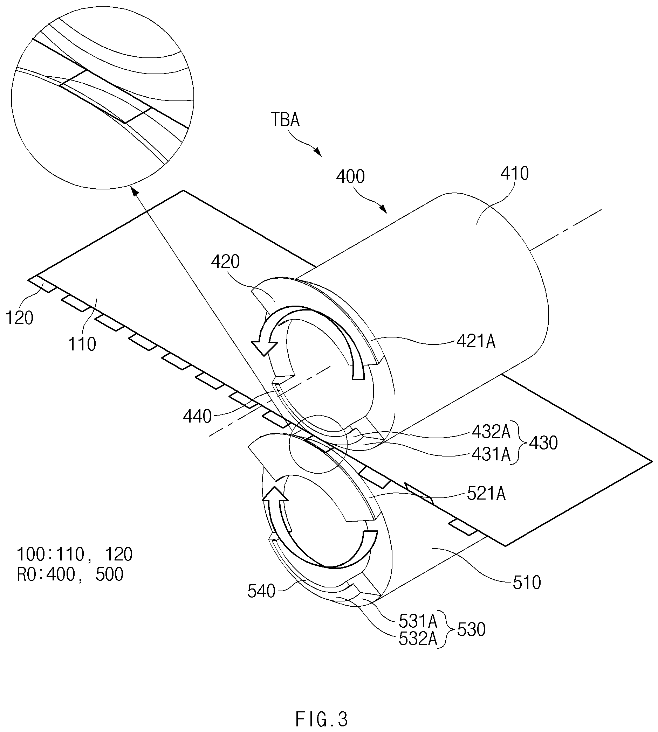

In this instance, the electrode tab 120 may include a first electrode tab 120a extending from the electrode body 110 and a second electrode tab 120b extending from the same side as a side of the electrode body 110, from which the first electrode tab 120a extends. With respect to FIG. 3, the side of the electrode body 110, from which the first electrode tab 120a and the second electrode tab 120b extend, may become the front. The first electrode tab 120a and the second electrode tab 120b may have a same polarity. For example, when the first electrode tab 120a is a positive electrode, the second electrode tab 120b may also be the positive electrode. Forming an electrode tab 120 having one polarity as a pair of electrode tabs 120 instead of a single electrode tab 120 may be for the purpose of preparing for a welding defect to be described below. Further, a plurality of electrode tabs 120 are formed, so that resistance caused by the electrode tabs 120 can be lowered while electricity is transferred through the electrode tabs 120. In this instance, the electrode tab 120 is not provided in a pair but may be provided with electrode tabs 120 of which number is larger than that of the pair of electrode tabs 120.

As shown in FIG. 3, the first electrode tab 120a may be located at the right side of the second electrode tab 120b to be bent to the lower side, and the second electrode tab 120b may be located at the left side of the first electrode tab 120a to be bent to the upper side. In this instance, the electrode tab 120 may be understood as an upper concept obtained by extracting common features of the first electrode tab 120a and the second electrode tab 120b. Further, a bending direction of the first electrode tab 120a is only different from a bending direction of the second electrode tab 120b, and the bending direction of the first electrode tab 120a may become another direction instead of the upper side according to the needs. In addition, the first electrode tab 120a may be located at another position instead of the right side of the second electrode tab 120b according to the needs. The first electrode tab 120a may be stacked in plurality to form a first electrode tab stack 121a, and the second electrode tab 120b may be stacked in plurality to form a second electrode tab stack 121b. In this instance, the electrode tab 120 may be understood as an upper concept obtained by extracting common features of the first electrode tab 120a and the second electrode tab 120b. In this instance, the electrode tab stack 121 may be understood as an upper concept obtained by extracting common features of the first electrode tab stack 121a and the second electrode tab stack 121b. In this instance, the first electrode tab stack 121a may be bent such that a lower surface thereof is exposed with respect to when the first electrode tab stack 121a extends in a direction parallel to the extending direction of the electrode body 110 before being bent. The second electrode tab stack 121b may be bent such that an upper surface thereof is exposed with respect to when the second electrode tab stack 121b extends in a direction parallel to the extending direction of the electrode body 110 before being bent. In other words, the electrode tab stack 121 may have a form in which the plurality of electrode tabs 120 are lowered and bent in one direction. Since the electrode tab stack 121 has a small degree to which it protrudes with respect to the electrode body 110, the dead space can be reduced.

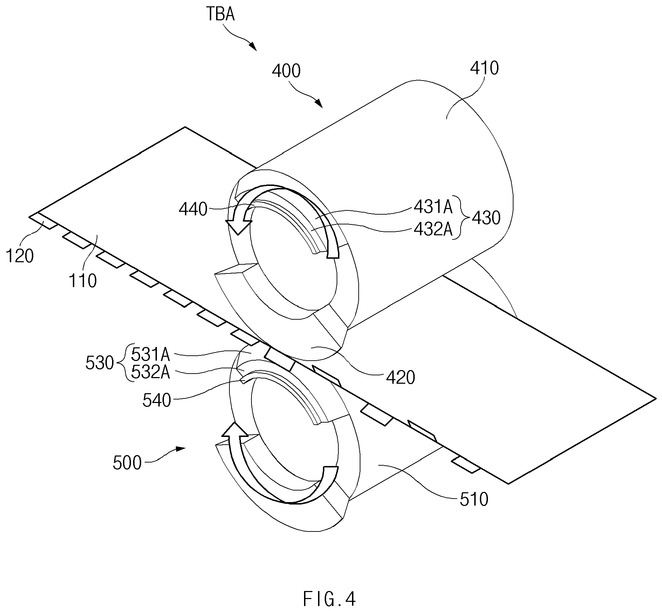

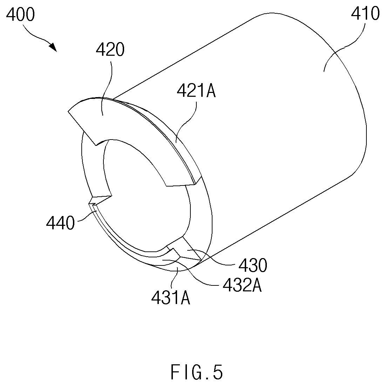

As shown in FIGS. 4 and 5, a first electrode lead 200 may be provided such that the first electrode tab 120a and the second electrode tab 120b are coupled to each other. The above-described electrode lead EL may be an upper concept obtained by extracting common features of the first electrode lead 200 and a second electrode lead 300. The first electrode lead 200 may be located at the front of the first electrode tab stack 121a and the second electrode 100 tab stack. Accordingly, a rear surface of the first electrode lead 200 may be coupled the lower surface of the first electrode tab stack 121a before the bending and the upper surface of the second electrode tab stack 121b before the bending. In other words, the first electrode lead 200 may be coupled to the first electrode tab stack 121a and the second electrode tab stack 121b by being welded to the first electrode tab stack 121a and the second electrode tab stack 121b in directions in which the first electrode tab stack 121a and the second electrode tab stack 121b extend while overlapping the first electrode tab stack 121a and the second electrode tab stack 121b. In this instance, the first electrode lead 200 may have a plate shape. More specifically, the first electrode lead 200 may have a plate shape and overlap the first electrode tab stack 121a and the second electrode tab stack 121b. The first electrode lead 200 may not be located beyond the stacked electrode body. However, when the first electrode lead 200 is coupled to the first electrode tab 120a and the second electrode tab 120b, the first electrode lead 200 may have another shape instead of the plate shape according to the needs. Further, the first electrode lead 200 may be formed as a single body. However, according to the needs, the first electrode lead 200 may be provided as an assembly of a plurality of components when the plurality of components are electrically connected to each other.

In this instance, the electrode tab stack 121 may have different overlapping degrees of the electrode tabs 120 according to positions thereof. When considering, with respect to FIG. 4, overlapping degrees of the electrode tabs 120 in a first tab overlapping area A1 located at an upper side and a second tab overlapping area A2 located at a lower side of the first tab overlapping area A1, a tab overlapping degree in the second tab overlapping area A2 is larger than a tab overlapping degree in the first tab overlapping area A1. In this instance, as shown in FIG. 5, in a case where a welding line WL is formed by performing welding toward the electrode tab stack 121 from an outside of the first electrode lead 200, when uniform thermal energy is applied to the welding line WL, the thermal energy generated by the welding can be sufficiently transferred to the electrode tabs 120 in the first tab overlapping area A1, but may not be sufficiently transferred to the electrode tab 120 closest to the electrode body 110 in the second tab overlapping area A2. Therefore, the electrode tab 120 closest to the electrode body 110 may not be coupled to an adjacent electrode tab 120. In order to overcome this, the electrode tab 120 may be composed of two electrode tabs, i.e., the first electrode tab 120a and the second electrode tab 120b, and the first electrode tab 120a and the second electrode tab 120b may be provided to have different bending directions. In particular, as shown in FIG. 4, when the second electrode tab 120b is bent to the lower side, larger overlapping of the second electrode tab 120b occurs at a portion of the second electrode tab stack 121b, which is located at a relatively lower side, as compared with a portion of the second electrode tab stack 121b, which is located at a relatively upper side, and therefore, there is a risk that the welding will not be properly performed. On the contrary, since smaller overlapping of the bent first electrode tab stack 121a occurs at a portion of the first electrode tab stack 121a, which is located at a relatively lower side, as compared with a portion of the first electrode tab stack 121a, which is located at a relatively upper side, the welding is performed on the first electrode tab stack 121a even when the welding is not properly performed on the second electrode tab stack 121b, thereby reducing a probability that an electrode tab 120 not welded to an adjacent electrode tab will exist. Further, when a single electrode tab 120 is provided, a bending moment may occur in a direction in which bending is released, and the first electrode lead 200 coupled to the single electrode tab 120 may be turned in one direction by the bending moment. However, in the first embodiment of the present disclosure, in a case where the first electrode tab 120a and the second electrode tab 120b are provided to have different bending directions, although a bending moment occurs in a direction in which bending of the first electrode tab stack 121a is released, a bending moment occurring in a direction in which bending of the second electrode tab stack 121b is released occurs in the opposite direction. Accordingly, the bending moments cancel each other, so that movement of the first electrode lead 200 can be prevented. Additionally, coupling of the first electrode lead 200, and the first electrode tab stack 121a and the second electrode tab stack 121b may be made by another method instead of the welding according to the needs.

Further, when the first electrode lead 200 is coupled to the first electrode tab stack 121a and the second electrode tab stack 121b, an end portion of the first electrode tab stack 121a may be exposed to an upper side of the first electrode lead 200, and an end portion of the second electrode tab stack 121b may be exposed to the upper side(→a lower side?) of the first electrode lead 200. The exposed end portion of the first electrode tab stack 121a may be bent to the lower side to face an outer surface of the first electrode lead 200, and the exposed end portion of the second electrode tab stack 121b may be bent to the upper side to face an outer surface of the first electrode lead 200. In other words, the end portions of the first electrode tab stack 121a and the second electrode tab stack 121b may be bent to be in contact with the opposite side of a side at which the first electrode lead 200 faces the electrode body 110.

The second electrode lead 300 coupled to the first electrode lead 200 may be provided. The second electrode lead 300 may be exposed to the outside of the battery case 10 such that an external component can be in contact therewith.

As described above, the first electrode tab 120a and the second electrode tab 120b, formed in the electrode 100, may be provided to be bent in different directions at one side of the electrode body 110. Hereinafter, a tab bending apparatus TBA configured to bend the electrode tab 120 of the electrode 100 will be described.

FIG. 3 is a perspective view showing the tab bending apparatus TBA for bending an electrode tab 120 and an electrode 100 as shown in FIG. 2. FIG. 4 is a perspective view showing that a first roller 400 and a second roller 500 shown in FIG. 3, are further rotated. FIG. 5 is a perspective view showing the first roller 400 shown in FIG. 3.

The tab bending apparatus TBA according to the first embodiment of the present disclosure will be described with reference to FIGS. 3 to 5.

The tab bending apparatus TBA configured to bend the electrode tab 120 which extends from an electrode body 110 of the electrode 100 and is provided in plurality may be provided. The electrode 100 provided while the tab bending apparatus TBA bends the electrode tab 120 may be an electrode 100 on which cutting is not performed yet. Therefore, the electrode body 110 may extend in one direction, and the electrode tab 120 may be provide in plurality to be arranged at one side of the electrode body 110 at a predetermined distance. Further, although it has been illustrated in the drawings of the present disclosure that the electrode tab 120 is formed only at the one side of the electrode body 110, the electrode tab 120 may be formed at an opposite side of the electrode body 110. However, for convenience of description, it has been illustrated in the drawings that the electrode tab 120 is formed only at the one side of the electrode body 110.

The tab bending apparatus TBA may include the first roller 400 and/or the second roller 500. In this instance, a roller RO including the first roller 400 and the second roller 500 may be defined to include common features of the first roller 400 and the second roller 500. In this instance, the first roller 400 and the second roller 500 may have a same shape. However, according to the needs, the first roller 400 and the second roller 500 may have different shapes.

The first roller 400 and the second roller 500 may be provided to be located at both sides of the electrode 100 and be rotated and moved. More specifically, the first roller 400 may be located at an upper side of the electrode body 110, and the second roller 500 may be located at a lower side of the electrode body 110. In other words, the electrode body 110 may be located between the first roller 400 and the second roller 500. The first roller 400 and the second roller 500 may be configured to press the electrode body 110 such that an active material can be better coated on a current collector. That is, the first roller 400 may be configured to be located at one side of the electrode 100 and be rotated and moved. The second roller 500 may be configured to be located at the opposite side of the one side of the electrode and be rotated and moved. The first roller 400 may be located at a position corresponding to the second roller 500. Further, the first roller 400 may be located at a position corresponding to the second roller 500 even while being rotated and moved.

In this instance, as shown in FIG. 5, the roller RO may include roller bodies 410, 510, pressing portions 420, 520, support portions 430, 530, and/or guide ribs 440, 540. In the roller RO, the support portions 430, 530 and the guide ribs 440, 540 may be omitted according to the needs. More specifically, in this instance, the first roller 400 may include a first roller body 410, a first pressing portion 420 having a first pressing inclined surface 421A, a first support portion 430 having a first support inclined surface 431A and a first guide surface 432A, and/or a first guide rib 440. The second roller 500 may include a second roller body 510, a second pressing portion 520 having a second pressing inclined surface 521A, a second support portion 530 having a second support inclined surface 531A and a second guide surface 532A, and/or a second guide rib 540. In this instance, the second roller body 510, the second pressing portion 520, the second support portion 530, and the second guide rib 540 may have shapes corresponding to the first roller body 410, the first pressing portion 420, the first support portion 430, and the first guide rib 440, respectively. According to the needs, the second roller body 510, the second pressing portion 520, the second support portion 530, and the second guide rib 540 may also have shapes different from those of the first roller body 410, the first pressing portion 420, the first support portion 430, and the first guide rib 440, respectively. For reference, the components of each of the first roller 400 and the second roller 500 may be integrally formed. However, according to the needs, the components of each of the first roller 400 and the second roller 500 may be formed as individual components as long as the components are rotated and moved together.

In this instance, the first roller body 410 may be configured to be in contact with the electrode body 110. The first roller body 410 may have a cylindrical shape inside which a hole is formed. However, the first roller body 410 may have another shape instead of the cylindrical shape according to the needs. The first roller body 410 may roll on the electrode body 110. In this instance, one end portion of the first roller body 410 may not extend beyond a point at which the electrode tab 120 is bent.

The first pressing portion 420 may extend in a radial direction of the first roller body 410 to press the electrode tab 120. The first pressing portion 420 may extend to an outside of the first roller body 410 in the radial direction from one end of the first roller body 410. The first pressing portion 420 may be provided adjacent to the electrode tab 120. With respect to FIG. 5, the first pressing portion 420 may extend upward from the front of the first roller body 410. The first pressing portion 420 may be provided to press and bend the electrode tab 120 as shown in FIG. 3.

Only a portion of the first pressing portion 420 may extend in a circumferential direction of the first roller body 410 with respect to a rotational axis of the first roller body 410. Accordingly, the first pressing portion 420 may be configured to press only any one of adjacent electrode tabs 120. The electrode tab 120 not pressed by the first pressing portion 420 may be pressed by the second pressing portion 520 in a direction different from that of the electrode tab 120 pressed by the first pressing portion 420. Further, the first support portion 430 may extend in the circumferential direction of the first roller body 410 by a length corresponding to the second pressing portion 520. Accordingly, the first support portion 430 can sufficiently interact with the second pressing portion 520.

The first pressing portion 420 may have the first pressing inclined surface 421A provided to be in contact with the electrode tab 120 in a direction facing the electrode tab 120. The first pressing inclined surface 421A may be formed to be inclined with respect to the radial direction of the first roller body 410. More specifically, the first pressing inclined surface 421A may be formed to be inclined in an extending direction of the rotational axis of the first roller body 410 with respect to the outside of the first roller body 410 in the radial direction. When the first pressing portion 420 is located at an upper side of the first roller body 410 as shown in FIG. 5, the first pressing inclined surface 421A may be located at the rear of the first pressing portion 420, and may be provided to be inclined frontward as the first pressing inclined surface 421A extends upward. However, the first pressing inclined surface 421A may not be limited to the above-described inclination as long as the first pressing inclined surface 421A has an inclination corresponding to the second support inclined surface 531A of the second support portion 530 which will be described later.

The first support portion 430 may be configured to support the electrode tab 120 while the second pressing portion 520 presses the electrode tab 120. The first support portion 430 may be located at the opposite side of a side at which the first pressing portion 420 is located with respect to the rotational axis of the first roller body 410. The first support portion 430 may extend in a direction in which the first roller body 410 extends. In particular, with respect to FIG. 5, the first support portion 430 may extend toward the front. When being compared with the first pressing portion 420, while the first pressing portion 420 is to bend the electrode tab 120 in one direction and therefore is exposed while extending to the outside of the first roller body 410 in the radial direction with respect to the first roller body 410, it is unnecessary for the first support portion 430 to press the electrode tab 120, and the first support portion 430 merely supports one surface of the electrode tab 120 bent by the first pressing portion 420. Accordingly, it is unnecessary for the first support portion 430 to extend to the outside of the first roller body 410 in the radial direction with respect to the first roller body 410. For reference, the second support portion 530 may be configured to support the electrode tab 120 while the first pressing portion 420 presses the electrode tab 120, so as to correspond to the first support portion 430.

In this instance, the first support portion 430 may have the first support inclined surface 431A configured to support the electrode tab 120 at a side facing the electrode tab 120. The first support inclined surface 431A may be located at a lower side of the first support portion 430 with respect to FIG. 5. The first support inclined surface 431A may be inclined to come close to the first roller body 410 as approaching the outside of the first roller body 410 in the radial direction. With respect to FIG. 5, the first support inclined surface 431A may be inclined toward the rear as approaching downward. In other words, the first support inclined surface 431A may be inclined to come close to the rotational axis of the first roller body 410 with respect to the extending direction of the rotational axis such that the electrode tab 120 is bent in a direction instead of a vertical direction with respect to the electrode body 110. The first support inclined surface 431A does not extend in a forward direction to the outside of the first roller body 410 in the radial direction but extends in a direction having a predetermined angle with respect to the forward direction, and accordingly, the electrode tab 120 is not bent vertically to the electrode body 410 but may be bent in a direction having a predetermined angle with respect to the vertical direction.

The first guide rib 440 may protrude from the first support portion 430. The first guide portion 440 may protrude to be stepped from the first support portion 430 such that the first guide surface 432A configured to face the second pressing portion 520 is located between the first guide rib 440 and the first support inclined surface 431A. The first guide rib 440 may extend in the circumferential direction of the first roller body 410 to support an end portion of the second pressing portion 520 in a radial direction of the second pressing portion 520 at an outside of the second pressing portion 520 in the radial direction. The first guide rib 440 may extend to corresponding to a degree to which the end portion of the second pressing portion 520 extends. More specifically, as shown in FIG. 3, the first guide rib 440 may limit a moving path of the second pressing portion 520 by blocking the second pressing portion 520 from moving upward at an upper side of the second pressing portion 520. Accordingly, the first guide rib 440 can prevent the second roller 500 from being separated upward.

The first guide rib 440 may be located at an upper side of the first support inclined surface 431A with respect to FIG. 5. The first support portion 430 may have the first guide surface 432A to be adjacent to the first guide rib 440 at the front thereof. The first guide surface 432A may be provided to face the second pressing portion 520.

An operation of the tab bending apparatus TBA according to the first embodiment of the present disclosure will be described with reference to FIGS. 3 and 4.

As shown in FIG. 3, the first roller 400 may be located at an upper side of the electrode 100, and the second roller 500 may be located at a lower side of the electrode 100. The second pressing portion 520 of the second roller 500 may pressure an electrode tab 120 to be bent upward. In this instance, the first support inclined surface 431A of the first support portion 430 may be located at an upper side of the electrode tab 120 bent by the second pressing portion 520 to support the bent electrode tab 120. In this instance, the second pressing inclined surface 521A of the second pressing portion 520 may be located with the electrode tab 120 interposed between the second pressing inclined surface 521A and the first support inclined surface 431A.

As shown in FIG. 4, the first roller 400 and the second roller 500 may be rolled and moved toward an electrode tab 120 not bent yet. While the first roller 400 and the second roller 500 are moved, the first roller body 410 and the second roller body 510 may be moved while pressing the electrode body 110. The first roller body 410 and the second roller body 510 may enable the active material located on the electrode body 110 to be attached stronger to the current collector.

As shown in FIG. 4, while the first pressing portion 420 presses the electrode tab 120 to the lower side, the second guide rib 540 located at a lower side of the first pressing portion 420 can prevent the first pressing portion 420 from being separated to an upper side of the first pressing portion 420. In this instance, while the first pressing portion 420 presses one of a plurality of electrode tabs 120, the second pressing portion 520 may be configured not to press any one of the plurality of electrode tabs 120. In other words, the second pressing portion 520 may not press an electrode tab 120 while the first pressing portion 420 presses the electrode tab 120, and the first pressing portion 420 may not press an electrode tab 120 while the second pressing portion 520 presses the electrode tab 120. The other processes may be performed by repeating the above-described processes.

That is, the first pressing portion 420 and the second pressing portion 520 may be configured to alternately bent the plurality of electrode tabs in different directions.

From the perspective of a single roller RO, the above contents may be described through the following contents. The roller RO is configured to be located at one side an electrode 100 in which an electrode tab 120 provided in plurality is formed and be rotated and moved, and may include the first roller body 410 configured to be in contact with an electrode body 110 and the first pressing portion 420 extending in a radial direction of the first roller body 410 to press the electrode tab 120. Further, the first pressing portion 420 may be configured to bend only ones of the plurality of tabs 120, which are not adjacent to each other.

The secondary battery B manufactured as described above includes the electrode assembly EA formed by stacking the electrode 100 including the electrode body 110 and the electrode tab 120 provided in plurality and extending from the electrode body 110, and the battery case 10 accommodating the electrode assembly EA. The electrode tab 120 may be provided in a pair to be bent in directions opposite to each other from the electrode body 110, and angles at which the pair of electrode tabs 120 are bent may be symmetrically the same. As described above, the first electrode lead 200 is coupled to the pair of bent electrode tabs 120 and is coupled to the pair of electrode tabs 120 while pressing the pair of electrode tabs 120, and thus the pair of electrode tabs 120 can be bent with a desired angle when being coupled to the first electrode lead 120 even though the pair of electrode tabs 120 are not bent vertically but bent with a predetermined angle.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

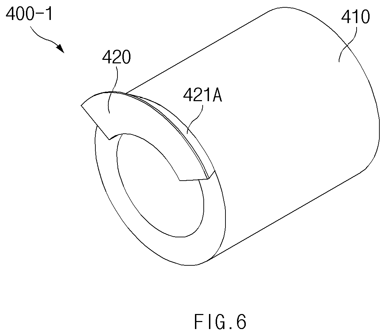

FIG. 6 is a perspective view of a first roller 400-1 according to a second embodiment of the present disclosure.

The first roller 400-1 according to the second embodiment of the present disclosure will be described with reference to FIG. 6.

The second embodiment is different from the first embodiment in that the first roller 400-1 does not include the first support portion 430 and the first guide rib 440.

Although the support portions 430, 530 are not included, the roller RO may alternately bend the electrode tabs 120 in different directions.

### Third embodiment

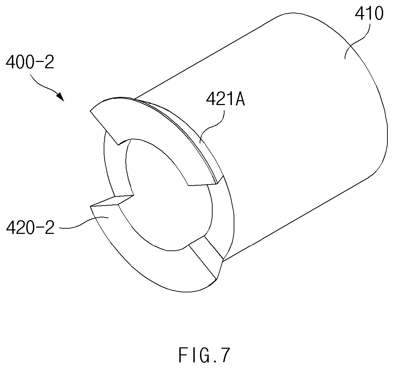

FIG. 7 is a perspective view of a first roller 400-2 according to a third embodiment of the present disclosure.

The first roller 400-2 according to the third embodiment of the present disclosure will be described with reference to FIG. 7.

The third embodiment is different from the first embodiment in that the first roller 400-2 includes a pair of first pressing portions 420-2.

The first roller 400-2 may include the pair of first pressing portions 420-2. The pair of first pressing portions 420-2 may be located at sides opposite to each other with respect to the rotational axis of the first roller body 410. Accordingly, the first roller 400-2 may press two electrode tabs 120 while rotating once.

### Forth embodiment

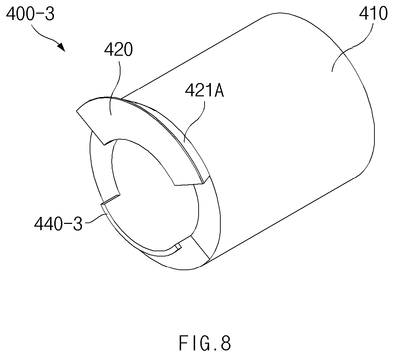

FIG. 8 is a perspective view of a first roller 400-3 according to a fourth embodiment of the present disclosure.

The first roller 400-3 according to the fourth embodiment of the present disclosure will be described with reference to FIG. 8.

The fourth embodiment is different from the first embodiment in that the first roller 400-3 does not include the first support portion 430 and includes only a first guide rib 440-3.

Although only the first guide rib 440 is included, a path of the second pressing portion 520 may be limited, so that the movement of the second roller 500 can be stably formed.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

B: secondary battery
10: battery case
11: accommodation portion
11S: electrode accommodation space
12: side portion
12a: lead sealing portion
12b: degassing sealing portion
12c: folding portion
EA: electrode assembly
100: electrode
110: electrode body
120: electrode tab
120a: first electrode tab
120b: second electrode tab
EL: electrode lead
200: first electrode lead
300: second electrode lead
TBA: tab bending apparatus
RO: roller
400: first roller
500: second roller
410: first roller body
510: second roller body
420: first pressing portion
520: second pressing portion
421A: first pressing inclined surface
521A: second pressing inclined surface
430: first support portion
530: second support portion
431A: first support inclined surface
531A: second support inclined surface
432A: first guide surface
532A: second guide surface
440: first guide rib
540: second guide rib

## Claims

1. A tab bending apparatus configured to bend an electrode tab extending from an electrode body of an electrode, the electrode tab being provided in plurality, the tab bending apparatus comprising:
a first roller configured to be located at one side of the electrode and be rotated and moved; and
a second roller configured to be located at the opposite side of the one side of the electrode and be rotated and moved,
wherein the first roller includes:
a first roller body configured to be in contact with the electrode body; and
a first pressing portion extending in a radial direction of the first roller body to press the electrode tab,
wherein the second roller includes:
a second roller body corresponding to the first roller body; and
a second pressing portion corresponding to the first pressing portion, and
wherein the first pressing portion and the second pressing portion are configured to alternately bend the plurality of electrode tabs in different directions.

2. The tab bending apparatus according to claim 1,
wherein the first pressing portion is located at an end portion of the first roller body and is provided adjacent to the electrode tab.

3. The tab bending apparatus according to claim 1,
wherein the first roller is located at a position corresponding to the second roller.

4. The tab bending apparatus according to claim 1,
wherein only a portion of the first pressing portion extends in a circumferential direction of the first roller body with respect to a rotational axis of the first roller body.

5. The tab bending apparatus according to claim 1,
wherein the first pressing portion is configured to press only any one of adjacent electrode tabs.

6. The tab bending apparatus according to claim 1,
wherein the second pressing portion is configured not to press any one of the plurality of electrode tabs while the first pressing portion presses one of the plurality of electrode tabs.

7. The tab bending apparatus according to claim 1,
wherein the first roller further includes a first support portion configured to support the electrode tab while the second pressing portion presses the electrode tab.

8. The tab bending apparatus according to claim 7,
wherein the second roller further includes a second support portion configured to support the electrode tab while the first pressing portion presses the electrode tab, so as to correspond to the first support portion.

9. The tab bending apparatus according to claim 7,
wherein the first support portion is located at the opposite side of a side at which the pressing portion is located with respect to the rotational axis of the first roller body.

10. The tab bending apparatus according to claim 7,
wherein the first support portion extends in the circumferential direction of the first roller body by a length corresponding to the second pressing portion.

11. The tab bending apparatus according to claim 7,
wherein the first support portion has a first support inclined surface configured to support the electrode tab at a side facing the electrode tab.

12. The tab bending apparatus according to claim 11,
wherein the first support inclined surface is inclined to come close to the rotational axis of the first roller body with respect to an extending direction of the rotational axis of the first roller body such that the electrode tab is bent in a direction instead of a vertical direction with respect to the electrode body.

13. The tab bending apparatus according to claim 1,
wherein the first roller includes a first guide rib extending in the circumferential direction of the first roller body to support an end portion of the second pressing portion in the radial direction at an outside of the second pressing portion in the radial direction.

14. The tab bending apparatus according to claim 13,
wherein the first roller further includes a first support portion configured to support the electrode tab while the second pressing portion presses the electrode tab, and
wherein the first guide rib protrudes from the first support portion.

15. The tab bending apparatus according to claim 14,
wherein the first support portion has a first support inclined surface configured to support the electrode tab at a side facing the electrode tab, and
wherein the first guide rib protrudes to be stepped from the support portion such that the first guide surface configured to face the second pressing portion is located between the first guide rib and the first support inclined surface.

16. A roller configured to be located at one side of an electrode in which an electrode tab provided in plurality is formed and be rotated and moved, the roller comprising:
a first roller body configured to be in contact with an electrode body; and
a first pressing portion extending in a radial direction of the first roller body to press the electrode tab,
wherein the first pressing portion is configured to bend only ones not adjacent to each other among the plurality of electrode tabs.

17. The roller according to claim 16,
wherein the first pressing portion is located at an end portion of the first roller body and is provided adjacent to the electrode tab.

18. The roller according to claim 16,
wherein only a portion of the first pressing portion extends in a circumferential direction of the first roller body with respect to a rotational axis of the first roller body.

19. The roller according to claim 16,
wherein the first roller includes a first support portion located at the opposite side of a side at which the pressing portion is located with respect to the rotational direction of the first roller body, the first support portion having a support inclined surface.

20. A secondary battery comprising:
an electrode assembly formed by stacking an electrode including an electrode body and an electrode tab provided in plurality, the electrode tab extending from the electrode body; and
a battery case accommodating the electrode assembly,
wherein the electrode tab is provided in a pair to be bent in directions opposite to each other from the electrode body, and
wherein angles at which the pair of electrode tabs are bent are symmetrically the same.
